# FASCICULE DE BREVET EUROPEEN

(11) **EP 0 823 347 B1**
(45) Date de publication et mention de la délivrance du brevet: **09.10.2002**
(21) Numéro de dépôt: 97401668.5
(22) Date de dépôt: 10.07.1997
(51) Int. Cl.: B60K 37/06

(54) **Dispositif de commande d'appareils par exemple dans un véhicule automobile**
Steuervorrichtung für Geräte, z.B. in Kraftfahrzeugen
Control device for apparatus e.g.in a motor vehicle

(30) Priorité: 29.07.1996 FR 9609532
(43) Date de publication de la demande: 11.02.1998
(73) Titulaire: AUTOMOBILES PEUGEOT, 75116 Paris (FR); AUTOMOBILES CITROEN, 92200 Neuilly-sur-Seine (FR)
(72) Inventeur: Riga, Alessandro, 75015 - Paris (FR)
(74) Mandataire: Lanceplaine, Jean-Claude

(56) Documents cités:
- DE-A- 3 628 333
- DE-C- 4 338 171

## Description

La présente invention a pour objet un dispositif de commande d'appareils par exemple dans un véhicule automobile.

Les véhicules automobiles sont équipés d'une multitude d'appareils, comme par exemple un système de chauffage, une climatisation, une radio ou un lecteur de disques numériques, qui nécessitent des boutons de commande à intégrer sur la planche de bord du véhicule automobile. Le document DE-C-4 338 171 montre les caractéristiques du préambule de la revendication 1.

Compte tenu des différentes fonctions de chaque appareil et de la variété de ces appareils, le nombre de boutons de commande est de plus en plus important ce qui pose, pour les constructeurs, des problèmes d'intégration de ces boutons de commande sur la planche de bord.

D'autre part, l'utilisateur se trouve en face d'une multitude de boutons de commande ce qui complique sa tâche pour le choix du bouton correspondant à l'appareil à commander et la sélection de la fonction recherchée pour cet appareil.

L'invention a pour but d'éviter ces inconvénients en proposant un dispositif de commande d'appareils par exemple dans un véhicule automobile qui permet de regrouper dans un ensemble compact un nombre important de boutons de commande de plusieurs appareils afin de gagner de la place sur la planche de bord dudit véhicule automobile, tout en étant d'une utilisation simple pour l'usager.

L'invention a donc pour objet un dispositif de commande d'appareils par exemple dans un véhicule automobile tel que défini par la revendication 1.

Selon d'autres caractéristiques de l'invention :
- le boîtier a la forme d'un cylindre,
- l'axe du boîtier est en appui à chacune de ses extrémités sur un support solidaire du panneau de réception,
- l'ouverture a une forme sensiblement rectangulaire ou carrée,
- l'ouverture comporte sur chacun de ses bords longitudinaux une encoche pour le passage des touches des claviers lors de la rotation du boîtier,
- la direction d'enfoncement des touches de chaque clavier est perpendiculaire à la surface du boîtier,
- la direction d'enfoncement des touches de chaque clavier est inclinée par rapport à la surface du boîtier,
- les touches de chaque clavier sont reliées aux appareils par des fils électriques qui convergent vers l'axe du boîtier,
- les organes d'actionnement sont formés par au moins un bouton de commande d'un moteur électrique coopérant avec une roue dentée solidaire du boîtier,
- la roue dentée est disposée sur l'axe du boîtier,
- la roue dentée est disposée à la périphérie du boîtier,
- les organes d'actionnement sont formés par un bouton de commande du moteur électrique pour chaque clavier,
- le dispositif comporte un écran de visualisation de l'information sélectionnée par le bouton de commande.

D'autres caractéristiques et avantages de l'invention apparaîtront au cours de la description qui va suivre, faite en référence aux dessins annexés, sur lesquels :
- la figure 1 est une vue schématique d'une partie d'une planche de bord d'un véhicule automobile équipée d'un dispositif de commande selon l'invention,
- la figure 2 est une vue schématique en perspective montrant le boîtier du dispositif de commande selon l'invention,
- la figure 3 est une vue en élévation d'un premier mode de réalisation des organes d'actionnement de la rotation du boîtier,
- la figure 4 est une vue en élévation d'un second mode de réalisation des organes d'actionnement de la rotation du boîtier,
- la figure 5 est une vue schématique de côté du boîtier montrant la disposition des touches des claviers dudit boîtier,
- la figure 6 est une vue schématique de côté du boîtier montrant une variante de la disposition des touches des claviers dudit boîtier,
- la figure 7 est une vue schématique en perspective du boîtier montrant le cheminement des fils électriques dans ce boîtier,
- la figure 8 est une vue de face d'une variante du dispositif de commande selon l'invention.

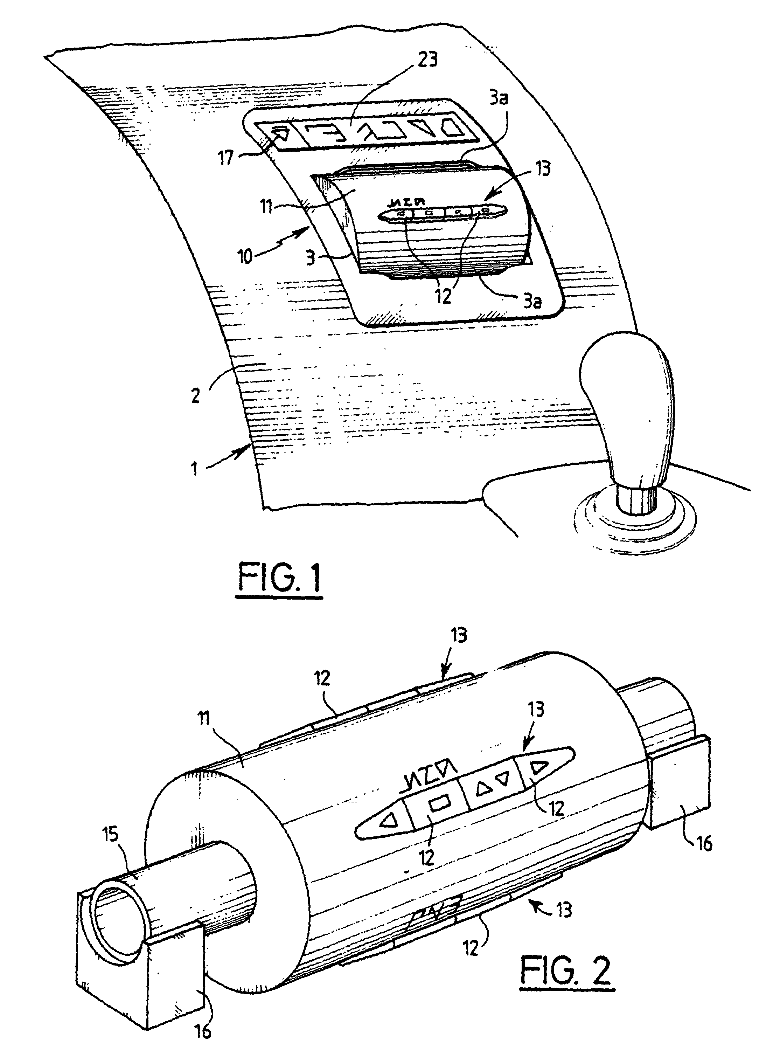

Sur la figure 1, on a représenté schématiquement une partie d'une planche de bord 1 d'un véhicule automobile qui comporte un panneau 2 sur lequel est monté un dispositif, désigné dans son ensemble par la référence 10, de commande de divers appareils, comme par exemple le chauffage, la climatisation, la radio ou encore un lecteur de disques numériques et autres.

Ainsi que représenté sur les figures 1 et 2, le dispositif de commande 10 comprend un boîtier 11 partiellement encastré dans le panneau 2 qui comporte, à cet effet, une ouverture 3 de façon à faire apparaître une portion du boîtier 11.

L'ouverture 3 ménagée dans le panneau 2 a une forme sensiblement rectangulaire ou carrée.

Le boîtier 11 a la forme d'un cylindre et comporte des rangées de touches 12 formant des claviers 13 uniformément répartis à la périphérie dudit boîtier 11.

Chaque clavier 13 correspond un appareil à commander et chaque touche 12 correspond à au moins une fonction à commander pour ledit appareil.

Dans le cas où les touches 12 des claviers 13 sont en relief par rapport à la surface extérieure du boîtier 11, l'ouverture 3 ménagée dans le panneau 2 comporte, sur chacun de ses bords longitudinaux, une encoche 3a (figure 1), pour le passage de ces touches 12 lors de la rotation du boîtier 11, comme on le verra ultérieurement.

Comme représenté sur les figures 1 à 4, le boîtier 11 est déplaçable en rotation autour d'un axe 15 par des organes d'actionnement pour faire apparaître dans l'ouverture 3, le clavier 13 correspondant à l'appareil à commander.

Pour cela, l'axe 15 du boîtier 11 est en appui à chacune de ses extrémités sur un support 16, par exemple en forme de berceau, solidaire du panneau de réception 2.

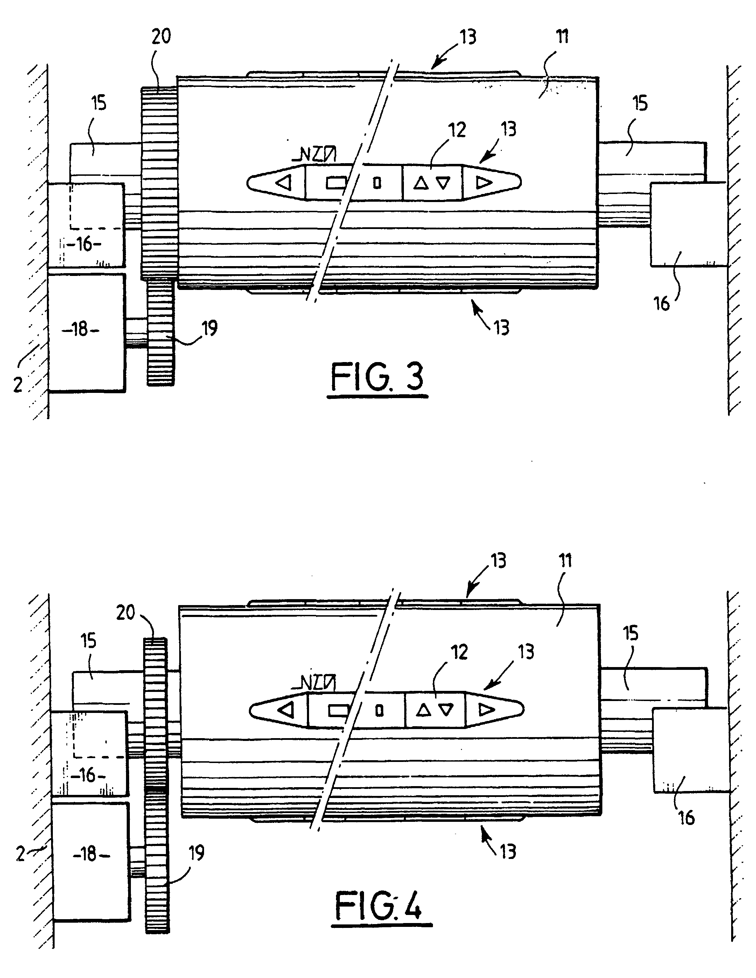

Les organes d'actionnement de la rotation du boîtier 11 sont constitués, d'une part, par au moins un bouton de commande 17 (figure 1) et, d'autre part, par un moteur électrique 18 commandé par ledit bouton 17 et comportant un pignon de sortie 19 coopérant avec une roue dentée 20 solidaire du boîtier 11 (figures 3 et 4).

Selon un premier mode de réalisation représenté à la figure 3, la roue dentée 20 est disposée à la périphérie du boîtier 11.

Selon un second mode de réalisation représenté à la figure 4, la roue dentée 20 est solidaire de l'axe 15 du boîtier 11.

Le bouton de commande est par exemple disposé au-dessus du boîtier 11.

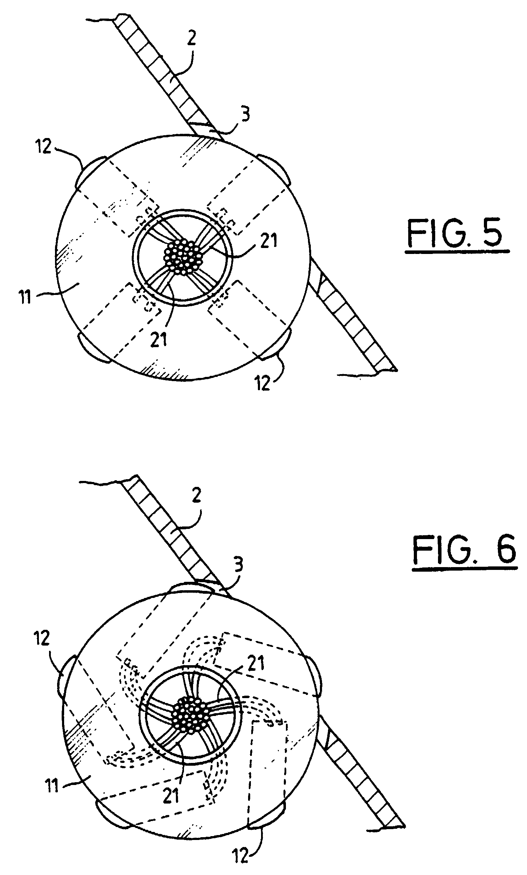

Ainsi que représenté à la figure 5, la direction d'enfoncement des touches 12 de chaque clavier 13 est perpendiculaire à la surface du boîtier 11.

Selon une variante représentée à la figure 6, la direction d'enfoncement des touches 12 de chaque clavier 13 est inclinée par rapport à la surface du boîtier 11.

L'orientation de ces touches 12 dépend de plusieurs paramètres, comme par exemple la taille du cylindre formant le boîtier 11 et la nature desdites touches 12.

Si le boîtier 11 possède un grand diamètre, les touches 12 peuvent être radiales (figure 5) et si le boîtier 11 est de faible diamètre, les touches 12 sont désaxées (figure 6).

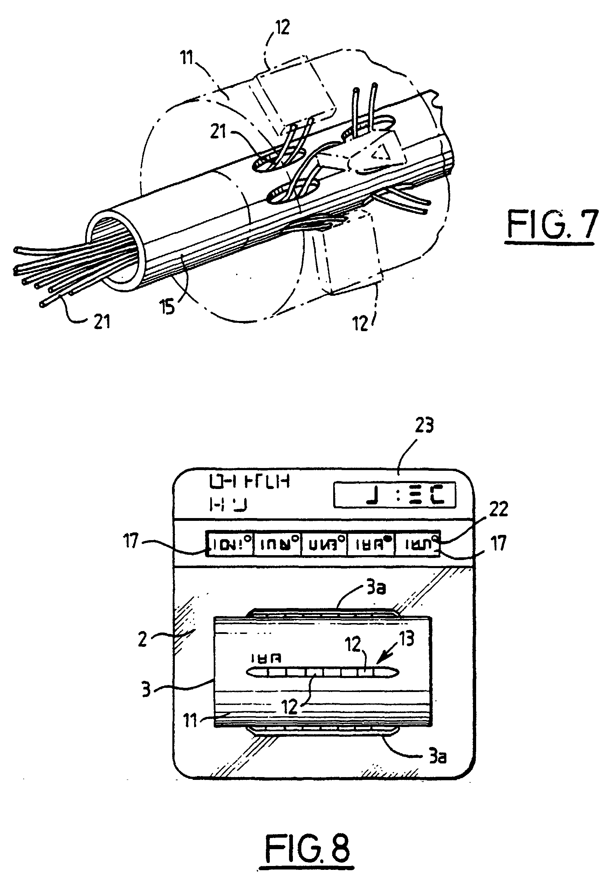

Comme représenté à la figure 7, les fils électriques 21 de raccordement des touches 12 de chaque clavier 13 avec les appareils à commander convergent vers l'axe 15 du boîtier 11 qui comporte, à cet effet, des trous 22 pour le passage de ces fils électriques 21.

Ces fils électriques 21 sortent du boîtier 11 par l'axe 15 ce qui ne perturbe pas la rotation dudit boîtier 11.

Selon un autre mode de réalisation représentée à la figure 8, le dispositif de commande comporte une série de boutons de commande 17 disposés par exemple au-dessus du boîtier II et qui correspondent chacun à un appareil à commander et par conséquent à un clavier 13 du boîtier 11.

Les boutons de commande 17 comportent un système d'éclairage 22 de façon à indiquer à l'usager le bouton de commande 17 sélectionné.

D'autre part, le dispositif de commande peut comporter un écran 23 de visualisation de diverses informations comme par exemple l'appareil sélectionné ou encore la température ou un canal radio.

Enfin, le boîtier 11 peut comporter à proximité de chaque clavier 13 une indication écrite correspondant à l'appareil à commander.

Pour commander un appareil, l'utilisateur appuie sur le bouton 17 ou sur l'un des boutons 17 correspondant à cet appareil ce qui provoque la rotation du boîtier 11 par l'intermédiaire du moteur électrique 18, du pignon 19 et de la roue dentée 20, jusqu'à l'apparition dans l'ouverture 3 du clavier 13 correspondant à l'appareil choisi.

Ensuite, il suffit à l'utilisateur d'utiliser le clavier 13 comme un clavier normal de commande en appuyant sur la touche 12 selon la fonction choisie.

Le dispositif de commande selon l'invention présente l'avantage d'être d'une utilisation aisée pour l'usager et de regrouper dans un ensemble compact un nombre important de boutons de commande de plusieurs appareils ce qui permet de faciliter l'intégration de ces boutons de commande sur la planche de bord et de gagner de la place.

Le dispositif de commande selon l'invention peut être utilisé dans de nombreuses applications et notamment dans des systèmes comportant des appareils à multiples fonctions.

## Revendications

1. Dispositif de commande d'appareils par exemple dans un véhicule automobile comprenant un boîtier (11) partiellement encastré dans un panneau de réception (2) muni d'une ouverture (3) et comportant des touches (12) formant des claviers (13) et **caractérisé en ce que** le boîtier (11) est déplaçable en rotation autour d'un axe (15) par des organes d'actionnement (17, 18, 19, 20) pour faire apparaître dans ladite ouverture (3) le clavier (13) correspondant à l'appareil à commander.

2. Dispositif selon la revendication 1, **caractérisé en ce que** le boîtier (11) a la forme d'un cylindre.

3. Dispositif selon les revendications 1 et 2, **caractérisé en ce que** l'axe (15) du boîtier (11) est en appui à chacune de ses extrémités sur un support (18) solidaire du panneau de réception (2).

4. Dispositif selon la revendication 1, **caractérisé en ce que** l'ouverture (3) a une forme sensiblement rectangulaire ou carrée.

5. Dispositif selon les revendications 1 et 4, **caractérisé en ce que** l'ouverture (3) comporte sur chacun de ses bords longitudinaux une encoche (3a) pour le passage des touches (12) des claviers (13) lors de la rotation du boîtier (11).

6. Dispositif selon la revendication 1, **caractérisé en ce que** la direction d'enfoncement des touches (12) de chaque clavier (13) est perpendiculaire à la surface du boîtier (11).

7. Dispositif selon la revendication 1, **caractérisé en ce que** la direction d'enfoncement des touches (12) de chaque clavier (13) est inclinée par rapport à la surface du boîtier (11).

8. Dispositif selon la revendication 1, **caractérisé en ce que** les touches de chaque clavier (13) sont reliées aux appareils par des fils électriques (21) qui convergent vers l'axe (15) du boîtier (11).

9. Dispositif selon la revendication 1, **caractérisé en ce que** les organes d'actionnement sont formés par au moins un bouton de commande (17) d'un moteur électrique (18) coopérant avec une roue dentée (20) solidaire du boîtier (11).

10. Dispositif selon la revendication 9, **caractérisé en ce que** la roue dentée (20) est disposée sur l'axe (15) du boîtier (11).

11. Dispositif selon la revendication 9, **caractérisé en ce que** la roue dentée (20) est disposée à la périphérie du boîtier (11).

12. Dispositif selon les revendications 1 et 9, **caractérisé en ce que** les organes d'actionnement sont formés par un bouton (17) de commande du moteur électrique (18) pour chaque clavier (13).

13. Dispositif selon l'une quelconque des revendications précédentes, **caractérisé en ce qu'**il comporte un écran (23) de visualisation de l'information sélectionnée par ledit bouton de commande (17).

## Patentansprüche

1. Steuervorrichtung für Geräte, z. B. in Kraftfahrzeugen, welche ein teilweise in eine mit einer Öffnung (3) ausgestattete Aufnahmetafel (2) eingebautes Gehäuse (11) umfasst und Tasten (12) aufweist, die Tastaturen (13) bilden, **dadurch gekennzeichnet, dass** das Gehäuse (11) durch Antriebsorgane (17, 18, 19, 20) in eine Drehbewegung um eine Achse (15) versetzbar ist, damit die zu dem Steuergerät gehörende Tastatur (13) in der Öffnung (3) sichtbar werden kann.

2. Vorrichtung gemäss Anspruch 1, **dadurch gekennzeichnet, dass** das Gehäuse (11) die Form eines Zylinders hat.

3. Vorrichtung gemäss den Ansprüchen 1 und 2, **dadurch gekennzeichnet, dass** die Achse (15) des Gehäuses (11) an jedem Ende in einer einstückig mit der Aufnahmetafel ausgebildeten Auflage (18) gelagert ist.

4. Vorrichtung gemäss Anspruch 1, **dadurch gekennzeichnet, dass** die Öffnung (3) eine deutlich rechteckige oder quadratische Form hat.

5. Vorrichtung gemäss den Ansprüchen 1 und 4, **dadurch gekennzeichnet, dass** die Öffnung (3) an jeder ihrer Längskanten eine Aussparung (3a) zum Durchlass der Tasten (12) der Tastaturen (13) bei der Drehbewegung des Gehäuses (11) aufweist.

6. Vorrichtung gemäss Anspruch 1, **dadurch gekennzeichnet, dass** die Senkrichtung der Tasten (12) jeder Tastatur (13) senkrecht zu der Oberfläche des Gehäuses (11) ist.

7. Vorrichtung gemäss Anspruch 1, **dadurch gekennzeichnet, dass** die Senkrichtung der Tasten (12) jeder Tastatur (13) im Vergleich zur Oberfläche des Gehäuses (11) geneigt ist.

8. Vorrichtung gemäss Anspruch 1, **dadurch gekennzeichnet, dass** die Tasten jeder Tastatur (13) durch elektrische Kabel (21), welche in der Achse (15) des Gehäuses (11) zusammenlaufen, mit den Geräten verbunden sind.

9. Vorrichtung gemäss Anspruch 1, **dadurch gekennzeichnet, dass** die Antriebsorgane aus mindestens einem Bedienungsknopf (17) eines elektrischen Motors (18), der mit einem einstückig mit dem Gehäuse (11) ausgebildeten Zahnrad (20) zusammenwirkt, gebildet sind.

10. Vorrichtung gemäss Anspruch 9, **dadurch gekennzeichnet, dass** das Zahnrad (20) auf der Achse (15) des Gehäuses (11) angeordnet ist.

11. Vorrichtung gemäss Anspruch 9, **dadurch gekennzeichnet, dass** das Zahnrad (20) in der Peripherie des Gehäuses (11) angeordnet ist.

12. Vorrichtung gemäss den Ansprüchen 1 und 9, **dadurch gekennzeichnet, dass** die Antriebsorgane durch einen Bedienungsknopf (17) des elektrischen Motors (18) für jede Tastatur (13) gebildet sind.

13. Vorrichtung gemäss irgendeinem der vorgenannten Ansprüche, **dadurch gekennzeichnet, dass** diese einen Bildschirm (23) zur Anzeige der durch den Bedienungsknopf (17) ausgewählten Information aufweist.

## Claims

1. Device for controlling appliances in for example a motor vehicle comprising a housing (11) partly housed in a receiving panel (2) with an opening (3) and comprising keys (12) forming keypads (13) and **characterized in that** the housing (11) is rotatable about a spindle (15) by actuating members (17, 18, 19, 20) so that the keypad (13) corresponding to that appliance which is to be controlled appears in the said opening (3).

2. Device according to Claim 1, **characterized in that** the housing (11) is cylindrical.

3. Device according to Claims 1 and 2, **characterized in that** the spindle (15) of the housing (11) rests at each of its ends on a support (18) integral with the receiving panel (2).

4. Device according to Claim 1, **characterized in that** the opening (3) is approximately rectangular or square.

5. Device according to Claims 1 and 4, **characterized in that** the opening (3) comprises a recess (3a) on each of its longitudinal edges to allow the keys (12) of the keypads (13) to pass through as the housing (11) rotates.

6. Device according to Claim 1, **characterized in that** the direction of depression of the keys (12) of each keypad (13) is perpendicular to the surface of the housing (11).

7. Device according to Claim 1, **characterized in that** the direction of depression of the keys (12) of each keypad (13) is inclined with respect to the surface of the housing (11).

8. Device according to Claim 1, **characterized in that** the keys of each keypad (13) are connected to the appliances by electric wires (21) which converge towards the spindle (15) of the housing (11).

9. Device according to Claim 1, **characterized in that** the actuating members are formed by at least one control button (17) for controlling an electric motor (18) meshing with a gear wheel (20) integral with the housing (11).

10. Device according to Claim 9, **characterized in that** the gear wheel (20) is located on the spindle (15) of the housing (11).

11. Device according to Claim 9, **characterized in that** the gear wheel (20) is located at the periphery of the housing (11).

12. Device according to Claims 1 and 9, **characterized in that** the actuating members are formed by a button (17) for controlling the electric motor (18) for each keypad (13).

13. Device according to any one of the preceding claims, **characterized in that** it comprises a screen (23) for displaying the information selected by the said control button (17).
